(19) Europäisches Patentamt
European Patent Office
Office européen des brevets

(11) Publication number: **0 198 508**
**B1**

(12) **EUROPEAN PATENT SPECIFICATION**

(45) Date of publication of the patent specification: **25.01.89**

(51) Int. Cl.⁴: **C 07 F 9/09**, C 07 C 101/24, C 07 C 129/12, A 61 K 31/66

(21) Application number: **86105400.5**

(22) Date of filling: **18.04.86**

(54) **L-phosphoserine salts, a process for the preparation thereof and pharmaceutical compositions containing them.**

(30) Priority: **19.04.85 IT 2042085**

(43) Date of publication of application: **22.10.86 Bulletin 86/43**

(45) Publication of the grant of the patent: **25.01.89 Bulletin 89/4**

(84) Designated Contracting States: **AT BE CH DE FR GB IT LI LU NL SE**

(56) References cited:
**EP-A-0 167 115**
**FR-A-2 461 725**
**FR-M-4 308**

(73) Proprietor: **LABORATORI PROPHIN S.p.A., Via A. Binda, 21, I-20143 Mailand (IT)**

(72) Inventor: **Volterra, Bruno, Via A.Binda 21, I-20143 Milan (IT)**

(74) Representative: **Bianchetti, Giuseppe, Studio Consulenza Brevettuale Via Rossini, 8, I-20122 Milan (IT)**

**EP 0 198 508 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convension).

LIBER, STOCKHOLM 1989

## Description

The present invention relates to L-Phosphoserine amino acid derivatives, of general formula

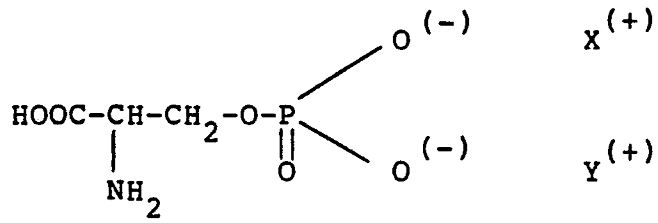

(I)

wherein X(+) and Y(+), which may be the same or different, represent the cation of a basic amino acid selected from Arginine and Lysine.

Phosphoserine, due to its well-known activity on Central Nervous System, is used in the treatment of psychic disorders, particularly in senile involution.

It has now been found that the salification products between phosphoserine and Arginine and/or Lysine, remarkably improve the energetic balance of cerebral cell, at the same time detoxifying it from catabolic products, therefore causing, in the clinical application, an improvement in neuro-affective parameters, which may be negatively affected mainly in patients of evolutional and involutional age.

The compounds according to the present invention are obtained by reacting in aqueous solution the starting compounds, then precipitating the resulting salts by means of a non-solvent, such as a lower alcohol or a lower ketone.

The following are non-limiting examples of the process for preparing the compounds of the invention.

### EXAMPLE 1

L-Phosphoserine salt with L-Arginine and L-Lysine (PR 157)

In a 500 ml beaker containing 30 ml of water, 29.2 g of a 50 % aqueous solution of L-Lysine base and 17.4 g of L-Arginine were added in succession, under stirring. Stirring was continued for about 2 hours, to complete dissolution. To the clear solution, 18.5 g of L-Phosphoserine were added progressively.

To the resulting completely clear solution, 200 ml of absolute ethanol were added, under strong stirring. The reaction mixture was left to stand for 2 hours, then the obtained oily solution was separated, which was slowly dropped into other 200 ml of absolute ethanol, under strong stirring.

After stirring for 4 hours, the mixture was filtered, the residue was washed with some ethanol and dried under vacuum overnight. 45 Grams were obtained (yield: 89 % of theory). M.p. 112 - 115° C.

### Elemental Analysis

Calc.-% C = 35.64; H = 7.17; O = 31.65
Found % C = 35.94; H = 6.84; O = 31.32.

### EXAMPLE 2

L-Phosphoserine salt with L-Arginine 1 : 2 (PR 156)

In a 500 ml beaker containing 50 ml of water, 18.5 g of L-Phosphoserine, then 34.8 g of L-arginine, were added, under stirring. Stirring was continued for about 3 hours, to complete dissolution. The resulting solution was diluted with 200 ml of acetone, to obtain an oily solution, which was decanted and slowly dropped in other 200 ml of acetone, under strong stirring.

Stirring was continued for 4 hours, then the mixture was filtered, the residue was washed with some ethyl acetate and dried under vacuum overnight. 52 Grams of title compound were obtained (yield 97.4 % of theory), melting at 80 - 85° C.

Analogously to the procedure described in Example 2, the L-Lysine double salt was prepared.

The elementary analysis is consistent with the structure of the compound.

Pharmacological properties

The compounds of the present invention were phacmacologically tested, in order to investigate any activity on acquirement processes, memory or depression.

Male young and elderly Wistar rats, weighing respectively 30 and 580 g, were used.

The test compounds, dissolved in physiological saline, were administered orally to young and elderly animals, at doses of 5, 10 and 20 mg/kg. Phosphoserine dissolved in physiological saline was administered at equimoleculat doses (1.8, 3.6 and 7.2 mg/kg). The control animals were administered with the sole vehicle. The administrations were carried out once a day during 20 days, the last administration being effected 1 hour before the tests.

The following behavioral tests were carried out:

1) Shuttle box test: to evaluate the acquirement of conditioned avoidance responses (CARs).

The results reported in Table 1 show that PR 157 caused an increase in the number of conditioned responses as well as in the percentage of learners, both in young and elderly animals. Phosphosetine caused similar effects on the elderly animals only. PR 156, which was tested only on young rats, proved also to be effective.

The activity was dose-related, and higher in the elderly animals treated with PR 157 than in those treated with phosphoserine at equimolecular doses.

TABLE 1

| TEST GROUPS | CARs* | LEARNERS (%) |
|---|---|---|
| Young rats | | |
| Vehicle (24) | 16.0 + 0.3 | 50.0 |
| PR 156 | | |
| 5 mg/kg (6) | 23.4 + 1.9** | 100.0 |
| 10 mg/kg (4) | 24.0 + 1.8** | 100.0 |
| PR 157 | | |
| 5 mg/kg (12) | 19.4 + 0.4* | 50.0 |
| 10 mg/kg (12) | 22.2 + 1.4* | 75.0** |
| 20 mg/kg (12) | 24.4 + 1.4* | 100.0** |
| Phosphoserine | | |
| 1.8 mg/kg (8) | 16.1 + 0.5 | 50.0 |
| 3.6 mg/kg (8) | 17.6 + 0.5 | 50.0 |
| 7.2 mg/kg (8) | 17.2 + 0.6 | 75.0 |
| Elderly rats | | |
| Vehicle (22) | 3.7 + 0.2 | 0.0 |
| PR 157 | | |
| 5 mg/kg (12) | 7.9 + 0.3* | 25.0 |
| 10 mg/kg (12) | 11.5 + 0.3* | 50.0** |
| 20 mg/kg (12) | 18.6 + 0.4* | 50.0** |
| Phosphoserine | | |
| 1.8 mg/kg (8) | 5.9 + 0.4* | 25.0 |
| 3.6 mg/kg (8) | 6.2 + 0.5* | 37.5* |
| 7.2 mg/kg (8) | 9.2 + 0.6* | 37.5** |

* Mean values + ES

** Significant diffecence in comparison with controls ($p < 0.05$, Dunnett's test).

Number of animals for each group is between brackets.

2. Dark box test: to furthet evaluate the effect on memory capability of the animals.

The results are reported in Table 2.

PR 157 caused a dose-related improvement in the acquirement of avoidance responses both in young and elderly animals, whilst phosphoserine proved to be effective only on the elderly animals. Moreover, PR 157 had an higher activity than that of phosphoserine.

**TABLE 2**

| TEST GROUPS | LATENCY Young rats | (seconds) Elderly rats |
|---|---|---|
| Vehicle | (24) 80.0 | (24) 20.0 |
| PR 157 5 mg/kg | (12) 112.3* | (12) 46.0* |
| 10 mg/kg | (12) 161.5* | (12) 79.4* |
| 20 mg/kg | (12) 265.1* | (12) 82.0* |
| Phosphoserine 1.8 mg/kg | (12) 97.5* | (12) 34.8 |
| 3.6 mg/kg | (12) 110.2* | (12) 50.7* |
| 7.2 mg/kg | (12) 186.0* | (12) 65.0* |

The values are averages.
* Significant difference in comparison with controls ($P < 0.05$, Mann-Whitney test).

The above tests prove that the compounds of the invention, particularly PR 157, have a marked dose-related activity on acquirement and memory processes, as well as on neuro-affective parameters,

The number of animals for each group is between brackets.

3. Despair test: to estimate the antidepressant activity on the elderly rats. The results are illustrated in Table 3.

PR 157 and Phosphoserine showed a dose-related reduction in the stillness of the elderly rats. At equimolecular doses, the activities of PR 157 and phosphoserine were substantially superimposable.

**TABLE 3**

| TEST GROUPS | DURATION OF STILLNESS |
|---|---|
| Vehicle (24) | 320.5 + 42.6 |
| PR 157 5 mg/kg (12) | 280.2 + 20.3* |
| 10 mg/kg (12) | 263.1 + 33.4* |
| 20 mg/kg (12) | 236.7 + 28.9* |
| Phosphoserine 1.8 mg/kg (12) | 301.0 + 31.4* |
| 3.6 mg/kg (12) | 291.7 + 32.7* |
| 7.2 mg/kg (12) | 265.8 + 24.7* |

Mean values + SEM
* Significant difference in comparison with controls ($P < 0.05$, Dunnett's test).
The number of animals for each group is between brackets.

The above tests prove that the compounds of the invention, particularly PR 157, have a marked dose-related activity on acquirement and memory processes, as well as on neuro-affective parameters, both in young and elderly animals, said activity being higher than that of phosphoserine.

Further, it should be pointed out that phosphoserine is active substantially only on elderly animals, showing poor effects on the young ones.

The compounds of the invention may be used in human therapy, for the treatment of neuro-affective deficiencies of both involutional and evolutional age, acquirement and memory deficiencies of evolutional age, intellection deficiencies and mental deterioration of senile involution.

The present invention also relates to all the industrial aspects connected with the use of compounds of general formula I as therapeutic agents. Therefore, a primary object of the invention is provided by pharmaceutical compositions containing, as the active ingredient, pre-set therapeutically effective amounts of at least one compound of formula I, optionally in admixture with conventional excipients.

Examples of said pharmaceutical compositions comprise tablets, dragees, capsules, syrups, sachets, vials for oral and parenteral administration.

The preferred dosage will vary, depending on conditions, weight and age of the patients, from about 150 to about 900 mg/day.

Non-limiting examples of pharmaceutical compositions according to the invention comprise:
150 and 300 mg tablets;
75 and 150 mg pediatric oral vials (in 5 ml);
150 and 300 mg adult oral vials (in 10 ml);
150 and 300 mg sachets;
100 and 150 mg i.m. vials.

**Claims** for the Contracting States: BE, CH, DE, FR, GB, IT, LI, LU, NL, SE

1. L-Phosphoserine amino acidic derivatives, of general formula I

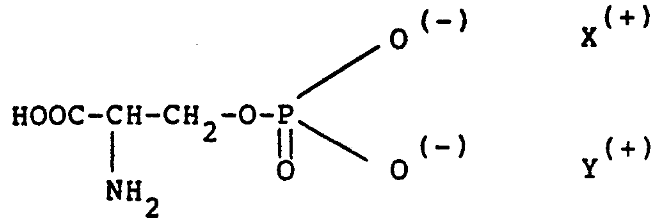

(I)

wherein X(+) and Y(+), which may be the same or different, represent the cation of a basic amino acid, selected from L-Arginine and L-Lysine.

2. A compound as claimed in claim 1, wherein X(+) = (+) the cation of L - Ar -ginine and Y (+) = the cation of L-Lysine.

3. A compound as claimed in claim 1, wherein X(+) = Y(+) = the cation of L-Arginine.

4. A compound as claimed in claim 1, whetein X(+) = Y(+) = the cation of L-Lysine.

5. A process for preparing any one of the compounds as claimed in claims 1 - 4, wherein L-Phosphoserine is reacted with L-Arginine and/or L-Lysine, in an aqueous solution, in appropriate molar ratios, and the resulting salt is precipitated by means of a non-solvent.

6. A process as claimed in claim 5, wherein the non-solvent is a lower alcohol, particularly ethanol.

7. A process as claimed in claim 5, wherein the nonsolvent is a lower ketone, particularly acetone.

8. Pharmaceutical compositions for the treatment of neuco-affective deficiencies of both involutional and evolutional age, acquirement and memory deficiencies of evolutional age, intellection deficiencies and mental deterioration of senile involution, containing as the active ingredient at least one compound as claimed in claims 1 to 4.

9. Pharmaceutical compositions as claimed in claim 8, for oral and parenteral administration, in form of tablets, capsules, syrups, sachets, oral vials and intramuscular injection vials.

**Claims** for the Contracting State: AT

1. A process for the preparation of L-Phosphoserine

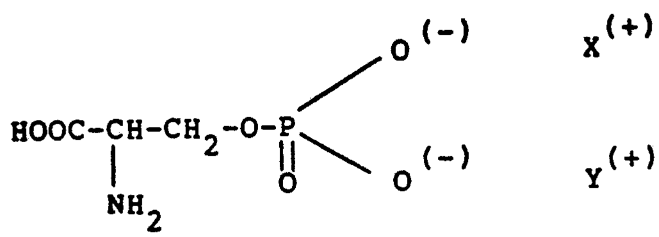

(I)

wherein X(+) and Y(+), which may be the same or different, represent the cation of a basic amino acid, selected from L-Arginine and L-Lysine, which process consists in reacting L-Phosphoserine with L-Arginine and/or L-Lysine, in an aqueous solution, in appropriate molar ratios, and precipitating the resulting salt by means of a non-solvent.

2. A process as claimed in claim 1, wherein the non-solvent is a lower alcohol, particularly ethanol.

3. A process as claimed in claim 1, wherein the non-solvent is a lower ketone, particularly acetone.

**Patentansprüche** für die Vertragsstaaten: BE, CH, FR, GB, IT, LI, LU, NL, SE, DE

1.L-Phosphoserinaminosäurederivate der allgemeinen Formel I

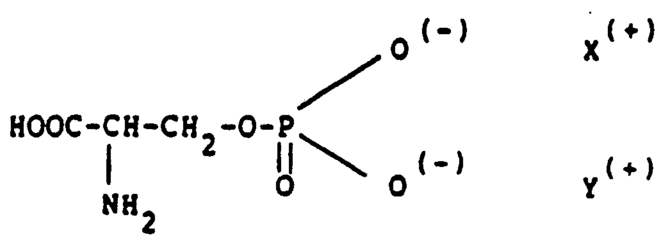

(I)

worin X(+) und Y(+), die gleich oder verschieden sein können, das Kation einer basischen Aminosäure darstellen, ausgewählt aus L-Arginin und L-Lysin.

2. Verbindung nach Anspruch 1, worin X(+) = das Kation von L-Arginin und Y(+) = das Kation von L-Lysin.

3. Verbindung nach Anspruch 1, worin X(+) = Y(+) das Kation von L-Arginin.

4. Verbindung nach Anspruch 1, worin X(+) = Y(+) das Kation von L-Lysin.

5. Verfahren zur Herstellung jeglicher der Verbindungen nach den Ansprüchen 1 bis 4, worin L-Phosphoserin mit L-Arginin und/oder mit L-Lysin in einer wässrigen Lösung in geeigneten molaren Verhältnissen umgesetzt wird und das erhaltene Salz mittels eines nicht-Lösungsmittels ausgefällt wird.

6. Verfahren nach Anspruch 5, worin das nicht-Lösungsmittel ein niedriger Alkohol, insbesondere Ethanol, ist.

7. Verfahren nach Anspruch 5, worin das nicht-Lösungsmittel ein niedriges Keton, insbesondere Aceton, ist.

8. Pharmazeutische Zusammensetzungen zur Behandlung von neuroaffektiven Störungen sowohl im involutionalen als auch im evolutionalen Alter, Aufnahmefähigkeits- und Gedächtnisstörungen im Entwicklungsalter, Verstandesstörungen und mentalem Verfall bei seniler Involution, enthaltend als aktiven Bestandteil mindestens eine Verbindung nach den Ansprüchen 1 bis 4.

9. Pharmazeutische Zusammensetzungen nach Anspruch 8 zur oralen und parenteralen Verabreichung in Form von Tabletten, Kapseln, Sirupen, Sachets, oralen Ampullen und intramuskulären Injektionsampullen.

**Patentansprüche** für den Vertragsstaat: AT

1. Verfahren zur Herstellung von L-Phosphoserinaminosäurederivaten der allgemeinen Formel I

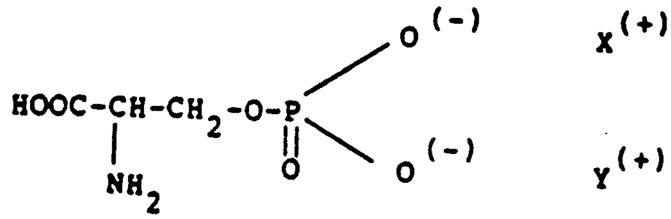

(I)

worin X(+) und Y(+), die gleich oder verschieden sein können, das Kation einer basischen Aminosäure darstellen, ausgewählt aus L-Arginin und L-Lysin, wobei dieses Verfahren besteht aus der Umsetzung von L-Phosphoserin mit L-Arginin und/oder L-Lysin in einer wässrigen Lösung in geeigneten molaren Verhältnissen und Ausfällen des erhaltenen Salzes mittels eines nicht-Lösungsmittels.

2. Verfahren nach Anspruch 1, worin das nicht-Lösungsmittel ein niedriger Alkohol, insbesondere Ethanol, ist.

3. Verfahren nach Anspruch 1, worin das nicht-Lösungsmittel ein niedriges Keton, insbesondere Aceton, ist.

**Revendications** pour les Etats Contractants: BE, CH, DE, FR, GB, IT, LI, LU, NL, SE

1. Dérivés de la L-Phosphosérine avec des acides aminés, ces dérivés étant représentés par la formule générale (I):

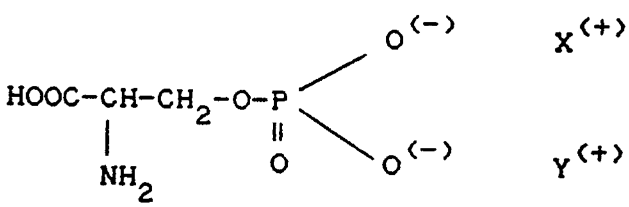

(I)

où X(+) et Y(+), qui peuvent être identiques ou différents, représentent le cation d'un acide aminé basique, choisi parmi la L-Arginine et la L-Lysine.

2. Composé selon la revendication 1, dans lequel X(+) le cation de la L-Arginine et Y(+) = le cation de la L-Lysine.

3. Composé selon la revendication 1, dans lequel X(+) = Y(+) = le cation de la L-Arginine.

4. Composé selon la revendication 1, dans lequel X(+) = Y(+) = le cation de la L-Lysine.

5. Procédé de préparation de l'un quelconque des composés tels que définis aux revendications 14, suivant lequel on fait réagir la L-Phosphosérine avec la L-Arginine et/ou la L-Lysine, dans une solution aqueuse, dans des rapports molaires appropriés, et on fait précipiter le sel résultant à l'aide d'un non-solvant.

6. Procédé selon la revendication 5, dans lequel le non-solvant est un alcool inférieur, en particulier l'éthanol.

7. Procédé selon la revendication %, dans lequel le non-solvant est une cétone inférieure, en particulier l'acétone.

8. Compositions pharmaceutiques pour le traitement des déficiences neuro-affectives à la fois de l'âge involutif et de l'âge évolutif, des déficiences d'acquisition et de la mémoire de l'âge évolutif, des déficiences intellectuelles et de l'altération mentale de l'involution sénile, ces compositions contenant, comme ingrédient actif, au moins un composé tel que défini aux revendications 1 à 4.

9. Compositions pharmaceutiques selon la revendication 8, pour l'administration orale et parentérale, sous la forme de comprimés, de capsules, de sirops, de sachets, d'ampoules orales et d'ampoules pour l'injection intramusculaire.

**Revendications** pour l'Etat Contractant: AT

1. Procédé de preparation de dérivés de la L-Phosphosérine avec des acides aminés, ces dérivés étant représentés par la formule générale (I)

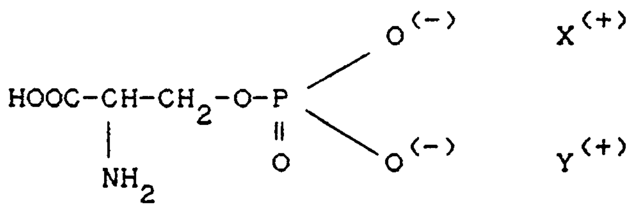

(I)

ou X(+) et Y(+), qui peuvent être identiques ou différents, représentent le cation d'un acide aminé basique, choisi parmi la L-Arginine et la L-Lysine, ce procédé consistant à faire réagir la L-Phosphosérine avec la L-Arginine et/ou la L-Lysine, dans une solution aqueuse, dans des rapports molaires appropriés, et à faire précipiter le sel résultant à l'aide d'un non-solvant.

2. Procédé selon la revendication 1, dans lequel le non-solvant est un alcool inférieur, en particulier l'éthanol.

3. Procédé selon la revendication 1, dans lequel le non-solvant est une cétone inférieure, en particulier l'acétone.